# EUROPÄISCHE PATENTSCHRIFT

(11) **EP 2 450 673 B1**
(45) Veröffentlichungstag und Bekanntmachung des Hinweises auf die Patenterteilung: **11.12.2013**
(21) Anmeldenummer: 11185422.0
(22) Anmeldetag: 17.10.2011
(51) Int. Cl.: G01D 5/38

(54) **Optische Positionsmesseinrichtung**
Optical positioning device
Dispositif optique de mesure de la position

(30) Priorität: 05.11.2010 DE 102010043469
(43) Veröffentlichungstag der Anmeldung: 09.05.2012
(73) Patentinhaber: Dr. Johannes Heidenhain GmbH, 83301 Traunreut (DE)
(72) Erfinder: Joerger, Ralph, 83278 Traunstein (DE); Hermann, Michael, 83342 Tacherting (DE); Holzapfel, Wolfgang, 83119 Obing (DE); Huber, Walter, 83278 Traunstein (DE)

(56) Entgegenhaltungen:
- EP-A2- 1 762 828
- DE-A1-102007 023 300

## Beschreibung

Die Erfindung betrifft eine optische Positionsmesseinrichtung zur Erfassung der Relativposition von zwei zueinander beweglichen Objekten. Insbesondere betrifft die Erfindung solche Positionsmesseinrichtungen, bei denen Maßverkörperungen mit optischen Gittern zum Einsatz kommen, die einfallendes Licht durch Beugung in unterschiedliche Teilstrahlen aufspalten. Durch Vereinigung geeigneter Teilstrahlen ergeben sich bei einer Verschiebung der einen Maßverkörperung gegenüber der anderen durch die Interferenz der beiden Teilstrahlen periodische Signale in einem Fotodetektor. Durch Zählen der Perioden im Detektor kann auf das Ausmaß der Verschiebung geschlossen werden.

Solche interferentiellen Positionsmesseinrichtungen werden für hochgenaue Positionsmessungen etwa in der Halbleiterindustrie eingesetzt, wo beispielsweise Belichtungsmasken für die Fotolithographie relativ zu einem Wafer mit Geschwindigkeiten von mehr als einem Meter pro Sekunde bewegt werden müssen, wobei eine Positioniergenauigkeit im Nanometer - Bereich und künftig auch darunter eingehalten werden muss. Ein großer Vorteil solcher Systeme gegenüber herkömmlichen Interferometern ist, dass die interferierenden Teilstrahlen nur sehr kurze Wege zurücklegen müssen, und damit kaum durch Umwelteinflüsse wie Luftdruck-, Temperatur- und Feuchtigkeitsschwankungen beeinträchtigt werden, die über einen schwankenden Brechungsindex der Luft die Messung verfälschen könnten.

Aus der WO 2008/138501 A1, von der die vorliegende Erfindung ausgeht, ist es bekannt, mit zwei gekreuzten Maßstäben zu arbeiten, die optische Gitter mit Strichen quer zur gemeinsamen Messrichtung tragen. Mittels eines solchen Messsystems lässt sich die Position eines in zwei Richtungen beweglichen Tisches in der Messrichtung erfassen, unabhängig von der Position des Tisches in der anderen der beiden Richtungen. Verwendet man zwei solcher Messsysteme, die im Winkel von 90 Grad zueinander angeordnet sind, so lässt sich die Position des Tisches auch in der zweiten Richtung erfassen, diesmal unabhängig von der Position des Tisches in der ersten Richtung.

Nachteilig an der in der WO 2008/138501 A1 offenbarten Anordnung ist, dass sich Bewegungen des Tisches senkrecht zur Tischebene nicht erfassen lassen.

Um die Position eines Tisches in der Tischebene zu erfassen, sind auch Messanordnungen mit Kreuzgittern bekannt, die an mehreren Stellen abgetastet werden und so laterale Verschiebungen und eine Drehung in der Tischebene erfassen können. In der EP 1019669 B1 ist zudem vorgeschlagen, zusätzliche Abstandssensoren zu verwenden, mit denen dann auch Bewegungen senkrecht zur Tischebene und damit alle sechs Freiheitsgrade des Tisches erfasst werden können. Solche Abstandsensoren, wie berührende oder kapazitive Messtaster, erfüllen aber nicht die Genauigkeitsanforderungen aktueller und zukünftiger Fertigungsanlagen in der Halbleiterindustrie. Hinzu kommt, dass hochgenaue, ausgedehnte Kreuzgitter nur äußerst aufwändig herzustellen sind.

In der EP 1762828 A2 ist eine optische Positionsmesseinrichtung beschrieben, die neben einer Messung in der eigentlichen Messrichtung (horizontale Messrichtung) zusätzlich eine Messung des sogenannten Abtastabstandes senkrecht zur Messrichtung erlaubt, also des Abstandes zwischen dem Maßstab und dessen Abtasteinheit. Dies ist gleichbedeutend mit der Messung eines zweiten Freiheitsgrades senkrecht zur Messrichtung (vertikale Messrichtung). Hierbei fällt ein Lichtstrahl durch eine transparente Abtastplatte mit verschiedenen optischen Strukturen auf eine reflektierende Maßverkörperung auf dem Maßstab. Das in zwei Teilstrahlenbündel aufgespaltene Licht wandert so mehrmals zwischen der Abtastplatte und dem Maßstab hin und her. Die Teilstrahlen eines Teilstrahlenbündels verlaufen dabei bezüglich einer Ebene senkrecht zur horizontalen Messrichtung asymmetrisch und weisen unterschiedliche Weglängen auf. Die Teilstrahlenbündel wechselwirken mit unterschiedlichsten, auf der Ober-und Unterseite der Abtastplatte bzw. auf der Ober- und Unterseite der Maßverkörperung angeordneten optisch wirksamen Strukturen, wie zum Beispiel mit Gittern zum Aufspalten oder Vereinigen von Lichtstrahlen unterschiedlicher Beugungsordnungen, Spiegeln zum Reflektieren und Linsen zum gezielten Ablenken von Licht.

Letztlich werden solche Teilstrahlen miteinander vereinigt, die miteinander interferieren und so bei einer Relativbewegung zwischen Maßverkörperung und Abtastkopf periodische Signale in mehreren Fotodetektoren erzeugen. Dank der asymmetrischen Anordnung der Teilstrahlen erhält man in den Detektoren periodische Signale, denen man sowohl die horizontale als auch die vertikale Verschiebung von Maßverkörperung und Abtastkopf entnehmen kann, und damit die laterale und vertikale Verschiebung der beiden zueinander beweglichen Objekte.

Aufgrund der Struktur der Abtastplatte des in der EP 1762828 A2 beschrieben Systems lässt sich dieses jedoch nicht für ein Messsystem mit gekreuzten Maßstäben verwenden, wie es weiter oben beschrieben ist. Die Abtastplatte lässt sich nicht zu einem zweiten Maßstab ausdehnen, relativ zu dem sich der erste Maßstab quer zur Messrichtung bewegen könnte, ohne die Messung zu stören.

Aufgabe der Erfindung ist es daher, eine optische Positionsmesseinrichtung mit zwei gekreuzten Maßstäben so weiter zu entwickeln, dass eine zusätzliche Messung des Abtastabstandes zwischen den beiden Maßstäben ermöglicht wird.

Diese Aufgabe wird gelöst durch eine Vorrichtung mit den Merkmalen des Anspruches 1. Vorteilhafte Ausführungsformen ergeben sich aus den Merkmalen, die in den von Anspruch 1 abhängigen Ansprüchen aufgeführt sind.

Es wird eine optische Positionsmesseinrichtung beschrieben, mit einem Abtaststab und einem Maßstab, wobei der Abtaststab in eine erste oder zweite von zwei Richtungen und der Maßstab in die jeweils andere der beiden Richtungen erstreckt ist, wobei der Maßstab in einer dritten Richtung senkrecht zur ersten und zweiten Richtung um einen Abtastabstand zum Abtaststab versetzt angeordnet ist. Die optische Positionsmesseinrichtung weist ferner eine Lichtquelle auf, deren Licht den Abtaststab an einem Kreuzungspunkt von Abtaststab und Maßstab durchstößt, um auf den Maßstab zu fallen und von dort zurück zum Abtaststab und weiter zu einem Detektor zu gelangen, wobei das Licht an optisch wirksamen Strukturen von Abtaststab und Maßstab durch Beugung in unterschiedliche Teilstrahlen aufgespalten und wieder vereinigt wird, wobei durch Interferenz von miteinander vereinigten Teilstrahlen bei einer Verschiebung zwischen Abtaststab und Maßstab in der ersten Richtung ein periodisches Signal im Detektor entsteht. Die optische Positionsmesseinrichtung ist dabei so ausgebildet, dass bei einer Änderung des Abtastabstandes zwischen Abtaststab und Maßstab ebenfalls periodische Signale im Detektor entstehen.

Dies wird erreicht, indem einzelne Teilstrahlen Gruppen bilden, wobei die Teilstrahlen einer ersten Gruppe und die Teilstrahlen einer zweiten Gruppe untereinander einen vom Abtastabstand abhängigen Phasenunterschied aufweisen.

Hierzu können die Teilstrahlen der ersten Gruppe bzw. die Teilstrahlen der zweiten Gruppe jeweils untereinander einen asymmetrischen Verlauf bezüglich einer Ebene senkrecht zur ersten Richtung aufweisen.

Die optischen Strukturen auf dem Abtaststab sind vorzugsweise periodisch oder translationsinvariant bezüglich der ersten Richtung, damit der Abtaststab über den gesamten Verfahrweg in der ersten Richtung ausgedehnt werden kann.

Die optischen Strukturen auf dem Maßstab sind vorzugsweise periodisch oder translationsinvariant bezüglich der zweiten Richtung, damit der Maßstab über den gesamten Verfahrweg in der zweiten Richtung ausgedehnt werden kann.

Um Detektorsignale ausreichender Qualität zu erhalten, sollten die optischen Strukturen außerdem lokal nicht mehr als zwei Periodizitäten aufweisen.

Weitere Vorteile sowie Einzelheiten der vorliegenden Erfindung ergeben sich aus der nachfolgenden Beschreibung bevorzugter Ausführungsformen anhand der Figuren. Dabei zeigen
- Figuren 1 - 4: eine optische Positionsmesseinrichtung nach dem Stand der Technik,
- Figuren 5 - 7: ein erstes Ausführungsbeispiel,
- Figuren 8 - 10: ein zweites Ausführungsbeispiel.

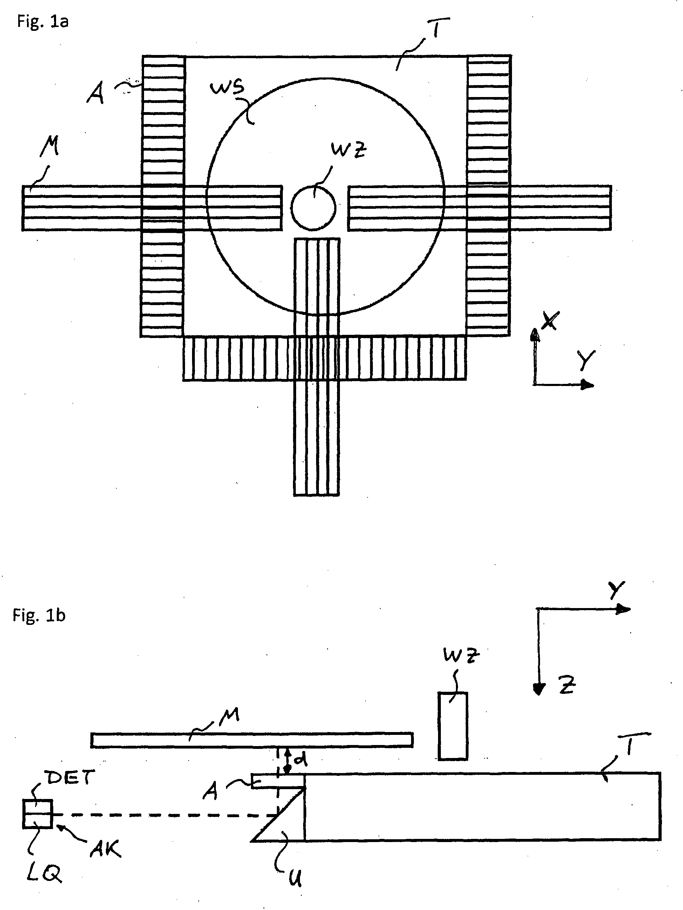

In der Figur 1a ist in einer Draufsicht ein Tisch T gezeigt, dessen Position in einer durch die erste Richtung X und die zweite Richtung Y aufgespannten Ebene erfasst werden soll. Hierzu sind am Tisch T optische Positionsmesseinrichtungen angeordnet, die jeweils einen an einer Tischkante angeordneten und in einer Messrichtung erstreckten Abtaststab A und einen quer zur Messrichtung erstreckten Maßstab M aufweisen. Sowohl der Abtaststab A als auch der Maßstab M tragen regelmäßige Gitterstrukturen, deren Gitterstriche quer zur jeweiligen Messrichtung liegen. Auf dem Tisch liegt ein Werkstück WS, das mit einem Werkzeug WZ bearbeitet werden soll. Beim Werkstück WS kann es sich beispielsweise um einen Wafer handeln, beim Werkzeug WZ um eine Belichtungsoptik, zu der der Wafer positioniert werden soll. Das Werkzeug WZ könnte auch die Abbildungsoptik eines Mikroskops sein, mit der der Wafer untersucht werden soll.

Um die Lage des Tisches T sowohl in der ersten Richtung X als auch in der zweiten Richtung Y erfassen zu können, und um außerdem auch eine Verdrehung des Tisches um eine Z - Achse senkrecht zur ersten und zweiten Richtung X, Y ermitteln zu können, sind drei dieser optischen Positionsmesseinrichtungen am Tisch T angeordnet. Betrachtet wird im Folgenden nur die in der Figur 1a am linken Tischrand angeordnete Positionsmesseinrichtung.

Die Figur 1b zeigt eine Seitenansicht der Figur 1a. Die erste Richtung X, die für die hier betrachtete Positionsmesseinrichtung die Messrichtung ist, steht senkrecht auf der Zeichenebene.

In einem Abtastkopf AK ist eine Lichtquelle LQ angeordnet, deren Licht zunächst auf einen Umlenkspiegel U fällt, der parallel zum Abtaststab A an der Tischkante angeordnet ist. Von dort fällt das Licht durch den transparenten Abtaststab A auf den reflektierenden Maßstab M, und weiter auf einem parallel zum Hinweg versetzten Rückweg zurück in den Abtastkopf AK, in dem mehrere Detektoren DET das einfallende Licht in elektrische Signale umwandeln. Diese Signale sind bei einer Verschiebung des Tisches T in Messrichtung X periodisch. Die Anzahl der Perioden, die durch Interpolation erhöht werden kann, ist ein Maß für die Verschiebung des Tisches T. Durch die Erzeugung mehrerer, gegeneinander phasenverschobener Signale (z.B. 0/90 Grad oder 0/120/240 Grad Phasenversatz) kann außerdem eine Richtungsinformation gewonnen werden.

Der Abtastkopf AK, der Maßstab M und das Werkzeug WZ sind in diesem Beispiel ortsfest, während der Tisch T mit Umlenkspiegel U, Abtaststab A und Werkstück WS gemeinsam in der Tischebene beweglich sind. Diese aus dem Stand der Technik bekannte Anordnung hat den Vorteil, dass die Messung der Lage des Tisches in der ersten Richtung X unabhängig von der Lage des Tisches in der zweiten Richtung Y möglich ist. Da die für die Positionsmessung entscheidenden Gitterstriche auf dem Abtaststab A und auf dem Maßstab M quer zur Messrichtung X liegen, bleiben bei einer Bewegung des Tisches T in der zweiten Richtung Y die Detektorsignale der Detektoren im Abtastkopf AK unverändert, und reagieren nur auf eine Bewegung in der eigentlichen Messrichtung X.

Der Abstand zwischen dem Abtaststab A und dem Maßstab M sei hier als Abtastabstand d bezeichnet. Führt der Tisch, z.B. aufgrund von Führungsfehlern, zusätzlich eine Bewegung in der dritten Richtung Z aus, so ändert sich damit zwangläufig auch der Abtastabstand d, da der Abtaststab A mit dem Tisch T fest verbunden und der Maßstab M gegenüber dem Tisch ortsfest ist. Über die Erfassung des Abtastabstandes d ließe sich also ein weiterer Freiheitsgrad des Tisches ermitteln.

Die im Stand der Technik bekannten Positionsmesseinrichtungen, die auf gekreuzten Maßverkörperungen wie in den Figuren 1a bzw. 1b dargestellt sind, können jedoch den Abtastabstand d nicht messen, sie sind im Gegenteil üblicherweise so ausgestaltet, dass sich eine kleine Änderung des Abtastabstandes möglichst nicht auf die eigentliche Positionsmessung auswirkt.

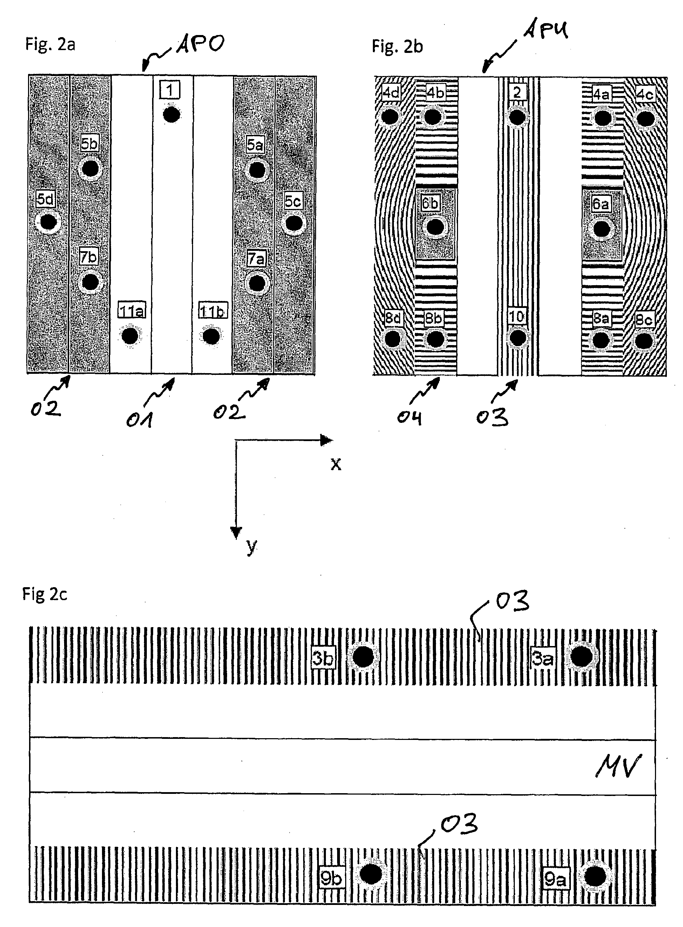

In den Figuren 2 - 4 ist eine optische Positionsmesseinrichtung aus dem Stand der Technik beschrieben, bei der der Abstand zwischen der Abtastplatte eines Abtastkopfes und eines Maßstabes zusätzlich und senkrecht zur eigentlichen Positionsmessung in Maßstabsrichtung erfasst werden kann.

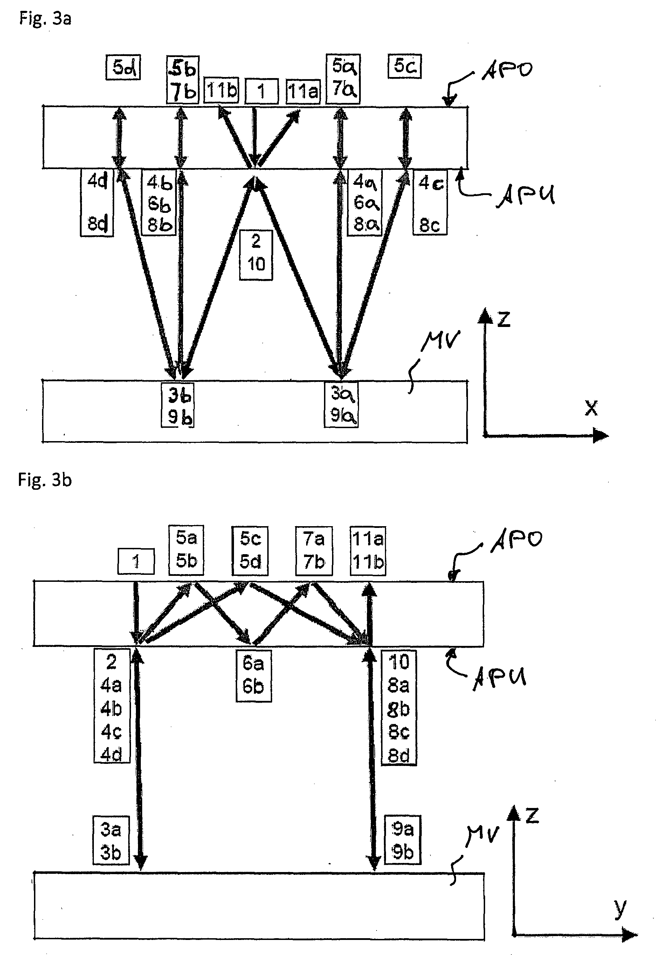

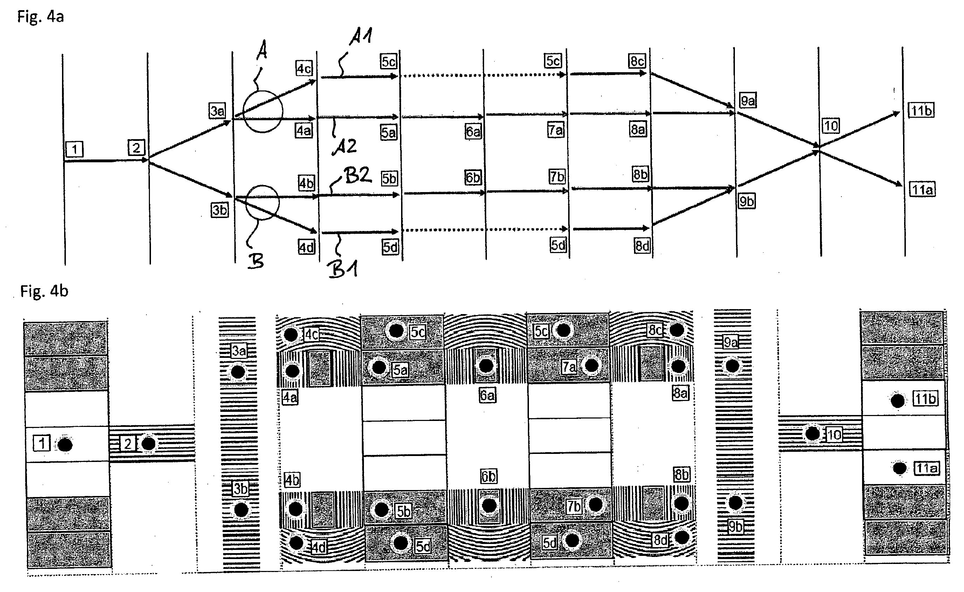

In den Figuren 2a, 2b und 2c ist in einer Draufsicht die Ober- und Unterseite einer transparenten Abtastplatte gezeigt, zusammen mit den jeweiligen Durchtrittspunkten von Lichtstrahlen der optischen Positionsmesseinrichtung. In den Figuren 3a und 3b sind Schnittdarstellungen gezeigt, die die räumliche Vorstellung des Strahlengangs unterstützen sollen. Die Figur 4a stellt einen aufgefalteten Strahlengang dar, bei der aus Gründen der Übersichtlichkeit auch Reflexionen als Transmission durch eine optische Grenzfläche dargestellt sind. In der Figur 4b, die Lagerichtig zur Figur 4a angeordnet ist, sind diese Grenzflächen und ihre Strukturierung nochmals dargestellt.

In allen Darstellungen sind die Durchtrittspunkte oder Auftreffpunkte des Lichts durch die Grenzflächen markiert und durchnummeriert. Mit jeder Wechselwirkung an einer Grenzfläche wird die Nummer eines Punktes um eins erhöht. Entstehen durch Beugung mehrere Teilstrahlen, so werden diese an den folgenden Auftreffpunkten mit a, b, c usw. benannt.

Die Figur 2a zeigt die Oberseite einer Abtastplatte APO, durch die im Punkt 1 Licht einer Lichtquelle einfällt. Die Abtastplatte ist an dieser Stelle transparent und vorzugsweise vergütet, um Rückreflexionen zu vermeiden. Bei der optischen Struktur O1 an der Stelle des Lichteintritts im Punkt 1 handelt es sich also um einen unstrukturierten Bereich des transparenten Glassubstrats der Abtastplatte. Die Figur 2b zeigt die Unterseite der Abtastplatte APU, die einer Maßverkörperung MV zugewandt ist. Im Punkt 2 trifft das Licht, von Punkt 1 kommend, auf ein regelmäßiges Gitter 03 und wird in zwei Teilstrahlen aufgeteilt, die die Abtastplatte verlassen und in den Punkten 3a und 3b auf die Maßverkörperung MV auftreffen.

Auch in den Punkten 3a und 3b trifft das Licht auf ein regelmäßiges Gitter 03, dessen Striche wie schon im Punkt 2 quer zur Messrichtung X liegen. Beide Teilstrahlen werden erneut in zwei Teilstrahlen aufgeteilt und zurück zur Unterseite der Abtastplatte APU reflektiert, wo sie in den Punkten 4a, 4b, 4c, 4d auftreffen.

Um gewisse Einflüsse gegen Verkippungen zwischen Maßstab und Abtastplatte zu kompensieren, müssen die vier Teilstrahlen an dieser Stelle parallel gerichtet und gleichzeitig auf spiegelnde Strukturen 02 auf der Oberseite der Abtastplatte fokussiert werden. Hierzu weist die Unterseite der Abtastplatte APU in den Punkten 4a und 4b optische Strukturen 04 in Form eines eindimensionalen Gitters mit veränderlicher Gitterperiode auf. Diese Strukturen wirken als Zylinderlinse und fokussieren das einfallende Licht. An den Punkten 4c und 4d sind die Gitterstriche zusätzlich gekrümmt, um neben der Linsenwirkung auch eine Parallelrichtung der jeweiligen Lichtstrahlen zu erreichen.

In den Punkten 5a, 5b, 5c und 5d treffen die vier Teilstrahlen auf spiegelnde Flächen der Oberseite der Abtastplatte APO.

Von den Punkten 5a und 5b erfolgt eine weitere Reflexion zu spiegelnden Flächen 02 auf der Unterseite der Abtastplatte APU, wo das Licht in den Punkten 6a und 6b auftrifft. Von dort läuft das Licht wieder zur Oberseite der Abtastplatte APO und trifft in den Punkten 7a und 7b auf spiegelnde Flächen 02.

Von den spiegelnden Flächen 02 in den Punkten 5c, 5d, 7a und 7b laufen die Lichtstrahlen erneut zur Unterseite der Abtastplatte APU, wo sie in den Punkten 8a und 8b auf eindimensionale Gitter 04 mit variabler Gitterperiode treffen, die als Zylinderlinsen wirken, bzw. in den Punkten 8c und 8d auf Strukturen, die zusätzlich zur Linsenwirkung mittels gekrümmter Gitterstriche eine Richtungsänderung der Strahlen bewirken. An den Punkten 9a und 9b auf der Oberseite der Maßverkörperung MV werden je zwei Lichtstrahlen zur Interferenz gebracht, wodurch mindestens zwei phasenverschobene Strahlenbündel erzeugt werden. Von den Punkten 9a und 9b der Maßverkörperung MV laufen die so erzeugten Lichtstrahlen zur Unterseite der Abtastplatte APU, wo sie im Punkt 10 auf das regelmäßiges Gitter 03 treffen und in eine passende Richtung abgelenkt werden. In den Punkten 11a und 11b verlassen dann zwei Lichtstrahlen die Abtastplatte an der Oberseite APO und gelangen schließlich zu Detektoren, in denen gegeneinander phasenverschobene Signale erzeugt werden.

Insbesondere in der Figur 4a ist zu erkennen, dass diejenigen Teilstrahlen A1, B1, die von Punkt 3a nach 4c, bzw. von 3b nach 4d laufen, im Abtastspalt zwischen Maßverkörperung MV und Unterseite der Abtastplatte APU, einen längeren Weg zurücklegen müssen als die beiden Teilstrahlen A2, B2, die von Punkt 3a nach 4a bzw. von Punkt 3b nach 4b laufen. Durch diese Asymmetrie bezüglich einer Ebene senkrecht zur Messrichtung X innerhalb der beiden Teilstrahlenbündel A, B ergibt sich in den interferierenden Teilstrahlen ein Phasenunterschied, der vom Abtastabstand d abhängt. Somit erzeugt eine Änderung des Abtastabstandes d ebenso periodische Signale in den Detektoren wie eine Verschiebung der Maßverkörperung MV in Messrichtung X relativ zur Abtastplatte.

Da aber die beiden Teilstrahlenbündel A und B zueinander bezüglich besagter Ebene senkrecht zur Messrichtung X symmetrisch verlaufen, lässt sich durch eine Aufsummierung der aus den beiden Teilstrahlenbündeln gewonnen Positionsinformation die reine Verschiebung in X-Richtung bestimmen, und aus einer Differenz der beiden Positionsinformationen die Änderung des Abtastabstandes d.

Eine ausführliche Herleitung der physikalischen Grundlagen und der prinzipiellen Funktionsweise der Messung der des Abtastabstandes d, beruhend auf der erwähnten Asymmetrie der betrachteten Teilstrahlenbündel bezüglich einer Ebene, die Senkrecht auf der lateralen Messrichtung steht, findet sich in den Absätzen [0021] bis [0038] der eingangs bereits erwähnten EP 1762828 A2, auf die hiermit ausdrücklich Bezug genommen werden soll. Das Ausführungsbeispiel der Figur 3 der EP 1762828 A2 ist in hier in den Figuren 2 - 4 dargestellt.

Anhand der Figuren 2a und 2b lässt sich jedoch auch erkennen, dass sich eine solche Positionsmesseinrichtung nicht ohne weiteres eignet, um in einem System eingesetzt zu werden, wie es in den Figuren 1a und 1b erklärt wurde.

Hierzu ist es nämlich nötig, dass sich die Auftreffpunkte des Lichts auf dem Abtaststab A in der Messrichtung X verschieben lassen, ohne dabei die Messung zu stören. Hierzu müssen die optischen Strukturen auf dem Abtaststab A periodisch oder translationsinvariant sein bezüglich der ersten Richtung X. Translationsinvariant sind Spiegelflächen oder transparente Flächen, die in der Messrichtung, also der ersten Richtung X ausgedehnt sind, und Gitterstrukturen, deren Linien parallel zur ersten Richtung X verlaufen. Geeignete periodische optische Strukturen sind Gitterstrukturen, deren Gitterperiode sich in X-Richtung nicht ändert.

Im Folgenden werden zwei Ausführungsbeispiele der Erfindung beschrieben, bei denen der Abtaststab ausschließlich solche translationsinvarianten oder periodischen Strukturen trägt. Somit lässt sich eine Positionsmesseinrichtung schaffen, die gemäß der Figuren 1a und 1b aufgebaut ist, und gleichzeitig eine Messung des Abtastabstandes d ermöglicht.

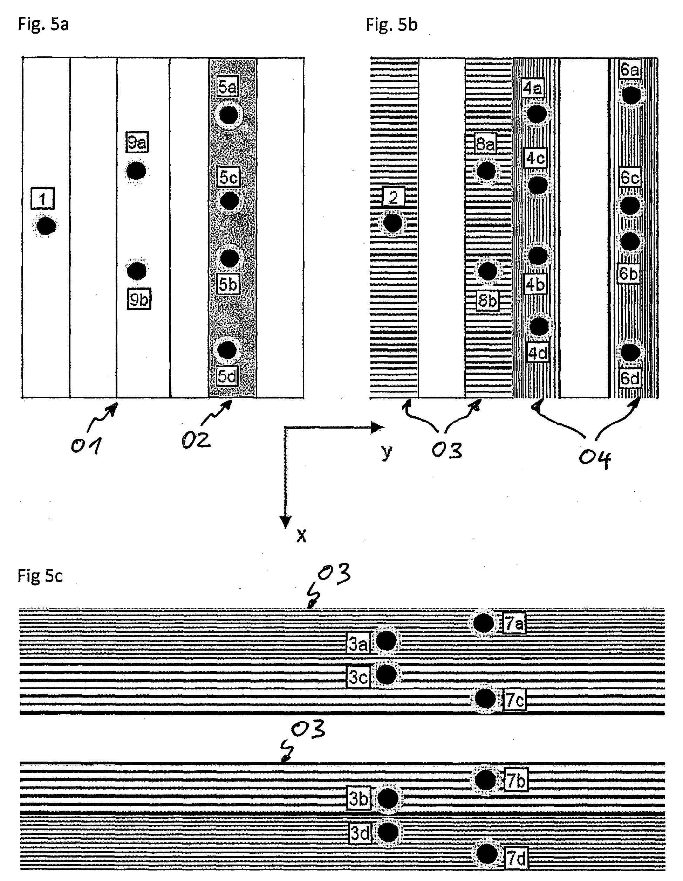

In den Figuren 5 - 7 ist ein erstes Ausführungsbeispiel der Erfindung gezeigt. Die Art der Darstellung wurde analog zur Darstellung des Standes der Technik in den Figuren 2 - 4 gewählt, indem die Auftreffpunkte der verschiedenen Lichtstrahlen durchnummeriert und in unterschiedlichen Ansichten der beteiligten Grenzflächen dargestellt wurde. Durch eine Zusammenschau der Figuren 5 - 7 lässt sich der Strahlengang des ersten Ausführungsbeispiels vollständig nachvollziehen.

Es sei hier auf einige Besonderheiten dieses Ausführungsbeispiels eingegangen:
Die Figuren 5a und 5b zeigen die Oberseite (auf die das Licht der Lichtquelle zuerst trifft) und die Unterseite des Abtaststabes A (bzw. jeweils einen Ausschnitt davon, denn der Abtaststab A ist in der ersten Richtung X ausgedehnt) mit seinen verschiedenen optischen Strukturen O1, 02, 03, 04. Diese Strukturen sind dabei entweder translationsinvariant bezüglich der ersten Richtung (also der Messrichtung) X, wie die lichtdurchlässigen Bereiche 01, die Spiegelflächen 02, und die eindimensionalen Gitter mit in Y-Richtung variabler Gitterperiode 04, deren Strichrichtung parallel zur Messrichtung X liegt, oder periodisch, wie die regelmäßigen Gitter 03, deren Strichrichtung quer zur Messrichtung X liegen. Die oben genannte Bedingung für einen geeigneten Abtaststab A ist damit erfüllt.

Die Figur 5c zeigt die Oberseite (auf die das Licht der Lichtquelle zuerst trifft) des Maßstabes M (bzw. einen Ausschnitt davon, denn der Maßstab M ist in der zweiten Richtung Y ausgedehnt) mit seinen verschiedenen optischen Strukturen 03. Diese Strukturen 03 sind translationsinvariant bezüglich der zweiten Richtung Y, die oben genannte Bedingung für einen geeigneten Maßstab M ist damit erfüllt.

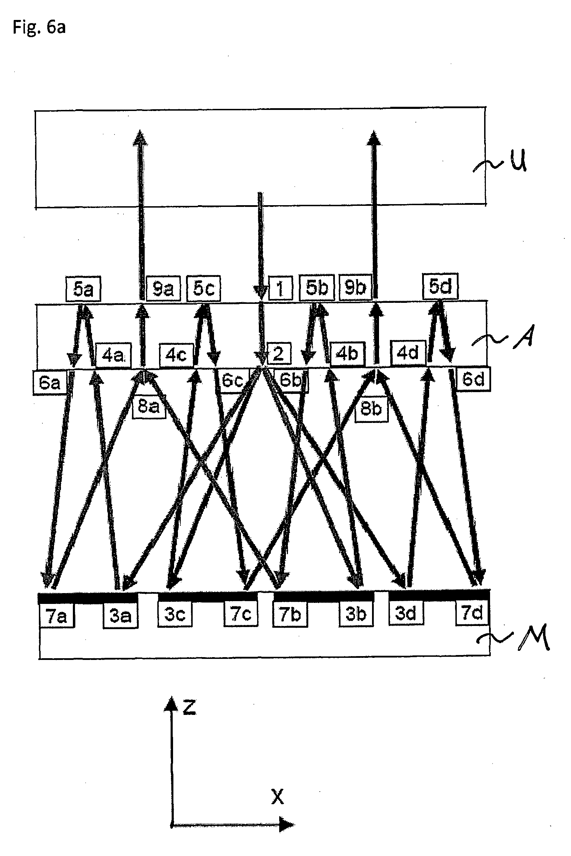

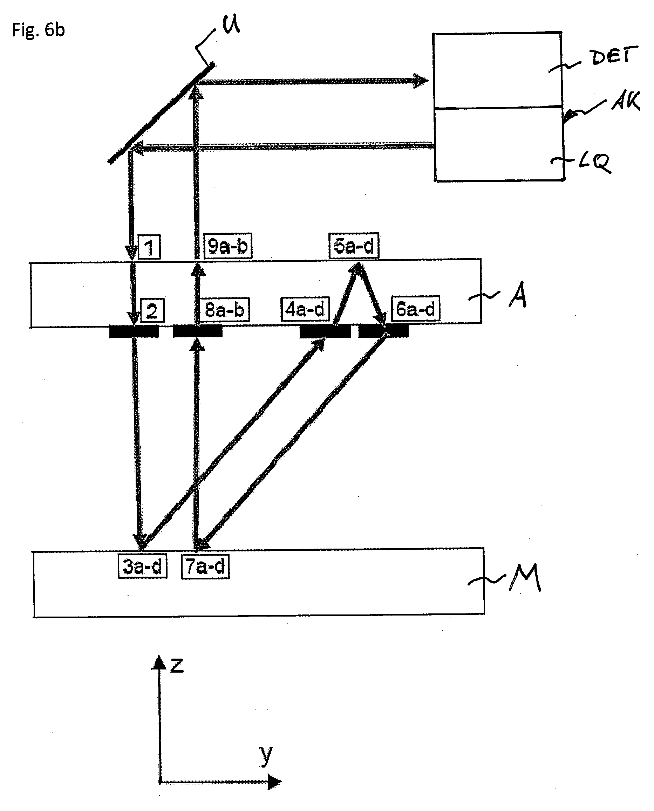

In den Figuren 6a und 6b ist das Umlenkelement U dargestellt, mit dem das Licht der Lichtquelle LQ vom Abtastkopf AK zum Abtaststab A bzw. von diesem zurück zu den Detektoren DET im Abtastkopf AK gelenkt wird.

Vom Auftreffpunkt 2 auf der Unterseite des Abtaststabes A laufen vier Lichtstrahlen zum Maßstab M. Die Lichtstrahlen A1, A2 mit den Auftreffpunkten 3d und 3c bilden dabei ein erstes Teilstrahlenbündel A, die Lichtstrahlen B1, B2 mit den Auftreffpunkten 3a und 3b bilden ein zweites Teilstrahlenbündel B.

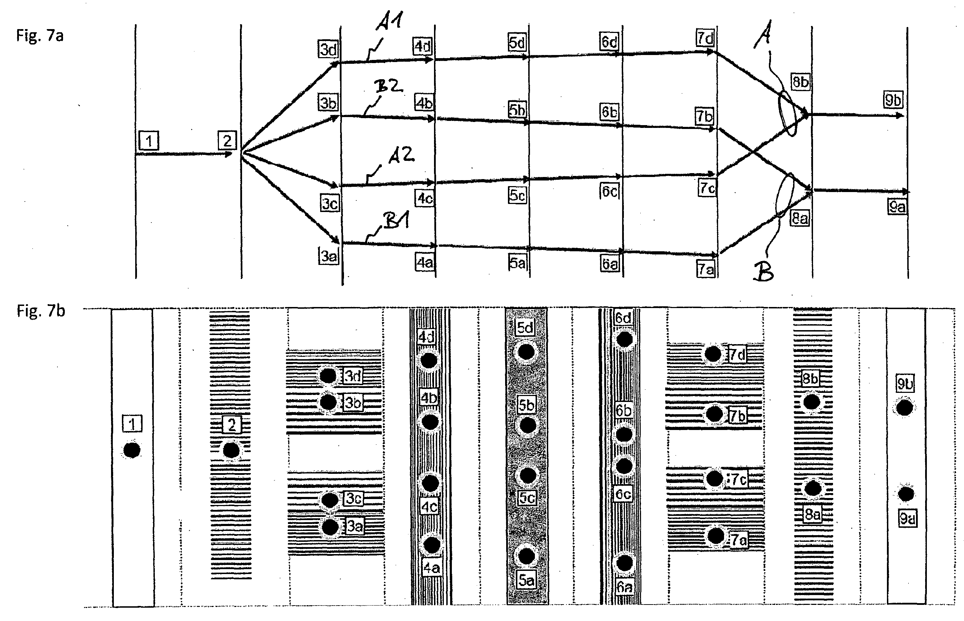

Deutlich erkennt man die Asymmetrie der Teilstrahlen A1, A2 bzw. B1, B2 innerhalb eines Teilstrahlenbündels A bzw. B, die zu unterschiedlich langen Lichtwegen zwischen den jeweiligen Teilstrahlen und damit zu einem Phasenunterschied führt, der zudem vom Abtastabstand d abhängt. Die beiden Teilstrahlen A1, A2 bzw. B1, B2 laufen jeweils asymmetrisch bzgl. einer Ebene, auf welche die Messrichtung X senkrecht steht, und die den Auftreffpunkt 2 enthält, wie man am besten dem aufgefalteten Strahlengang der Figur 7a entnehmen kann.

Außerdem erkennt man die Symmetrie zwischen den beiden Teilstrahlenbündeln A und B, die nötig ist, um durch Addition der Positionsinformation aus den beiden Teilstrahlenbündeln die Verschiebungsinformation in X-Richtung zu ermitteln, und durch Subtraktion die Änderung des Abtastabstandes d. Spiegelt man die beiden Teilstrahlen A1, A2 des Strahlenbündels A an besagter Ebene, so erhält man das Strahlenbündel B.

Wieder findet man die Kombination aus diffraktiver Zylinderlinse (optische Struktur 04, die die Auftreffpunkte 4a - 4d enthält), Spiegel (optische Struktur 02, die die Auftreffpunkte 5a - 5d enthält) und weiterer diffraktiver Zylinderlinse (optische Struktur 04, die die Auftreffpunkte 6a - 6d enthält), mit der eine Retroreflexion aller Teilstrahlen A1, A2, B1, B2 zur Kompensation von Kippbewegungen des Abtaststabes A bewirkt wird.

An den Auftreffpunkten 8b bzw. 8a werden die Teilstrahlen der beiden Teilstrahlenbündel A, B vereinigt und zur Interferenz gebracht. An den Punkten 9a und 9b verlassen dann zwei Lichtstrahlen den Abtaststab A Richtung Umlenkelement U, aus denen sich die benötigten periodischen Signale in bekannter Weise gewinnen lassen.

Ein Nachteil der unterschiedlichen Weglängen und damit des Phasenunterschieds der Teilstrahlen innerhalb eines Teilstrahlenbündels ist, dass auch Änderungen in der Lichtwellenlänge zu periodischen Signalen in den Detektoren des Abtastkopfes AK führen.

Im zweiten Ausführungsbeispiel wird eine Möglichkeit gezeigt, die Wellenlängenabhängigkeit der Positionsmessungen (X und d) zumindest zu reduzieren, indem die Phasendifferenz der zur Interferenz gebrachten Teilstrahlen im Arbeitspunkt, also im Soll - Abtastabstand, verschwindet.

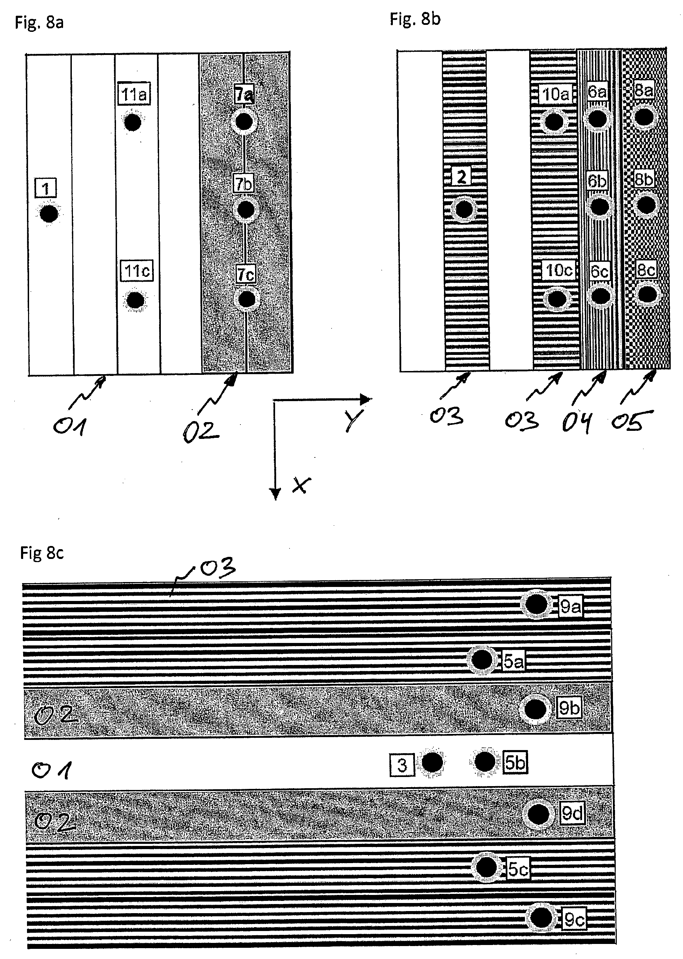

In den Figuren 8 - 10 ist das zweite Ausführungsbeispiel der Erfindung gezeigt. Die Art der Darstellung wurde analog zur Darstellung des ersten Ausführungsbeispiels in den Figuren 5 - 7 gewählt, indem die Auftreffpunkte der verschiedenen Lichtstrahlen durchnummeriert und in unterschiedlichen Ansichten der beteiligten Grenzflächen dargestellt wurde. Durch eine Zusammenschau der Figuren 8 - 10 lässt sich der Strahlengang des zweiten Ausführungsbeispiels vollständig nachvollziehen.

Es sei wieder auf einige Besonderheiten dieses Ausführungsbeispiels eingegangen:
Die Figuren 8a bzw. 8b zeigen die Oberseite (auf die das Licht der Lichtquelle zuerst trifft) bzw. die Unterseite des Abtaststabes A (bzw. jeweils einen Ausschnitt davon, denn der Abtaststab A ist in der ersten Richtung X ausgedehnt) mit seinen verschiedenen optischen Strukturen O1, 02, 03, 04, 05. Diese Strukturen sind dabei entweder translationsinvariant bezüglich der ersten Richtung (also der Messrichtung) X, wie die lichtdurchlässigen Bereiche O1, die Spiegelflächen 02, und die eindimensionalen Gitter mit in Y-Richtung variabler Gitterperiode 04, deren Strichrichtung parallel zur Messrichtung X liegt, oder periodisch, wie die regelmäßigen Gitter 03, deren Strichrichtung quer zur Messrichtung X liegen, oder wie das zweidimensionale Gitter 05, dessen Gitterperiode in Messrichtung X konstant, aber in der zweiten Richtung Y variabel ist. Die oben genannte Bedingung für einen geeigneten Abtaststab A ist damit wiederum erfüllt.

Die Figur 8c zeigt die Oberseite (auf die das Licht der Lichtquelle LQ zuerst trifft) das Maßstabes M (bzw. eines Ausschnitts davon, denn der mAßstab M ist in die zweite Richtung Y ausgedehnt) mit seinen verschiedenen optischen Strukturen 01, 02, 03. Diese Strukturen sind wieder translationsinvariant bezüglich der zweiten Richtung Y.

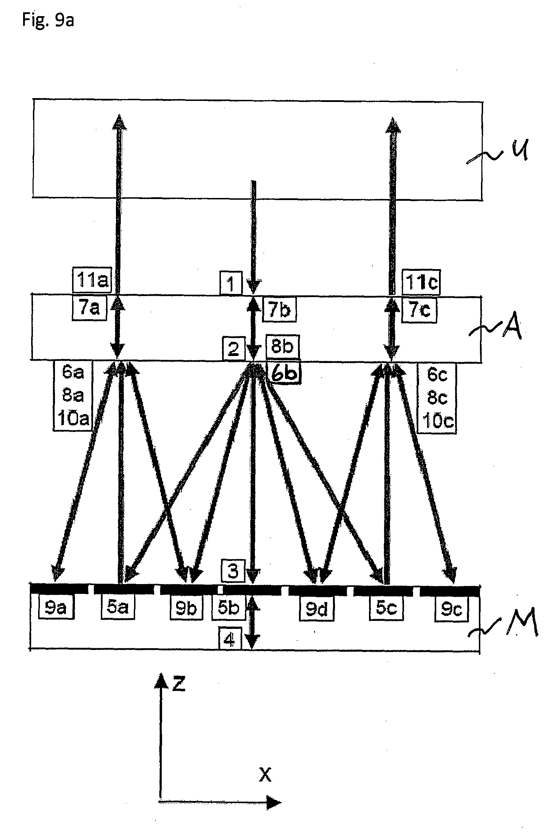

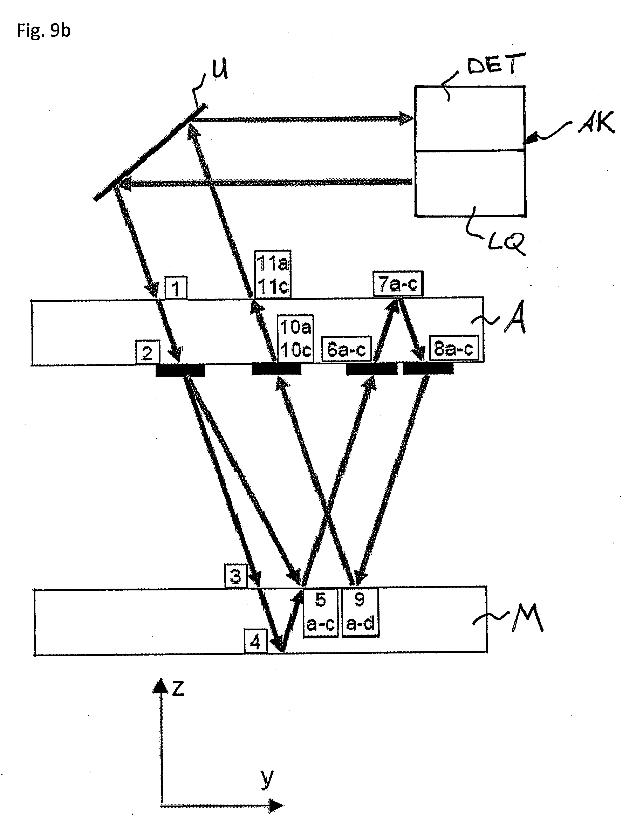

In den Figuren 9a und 9b ist das Umlenkelement U dargestellt, mit dem das Licht der Lichtquelle LQ vom Abtastkopf AK zum Abtaststab A bzw. von diesem zurück zu den Detektoren DET im Abtastkopf AK gelenkt wird.

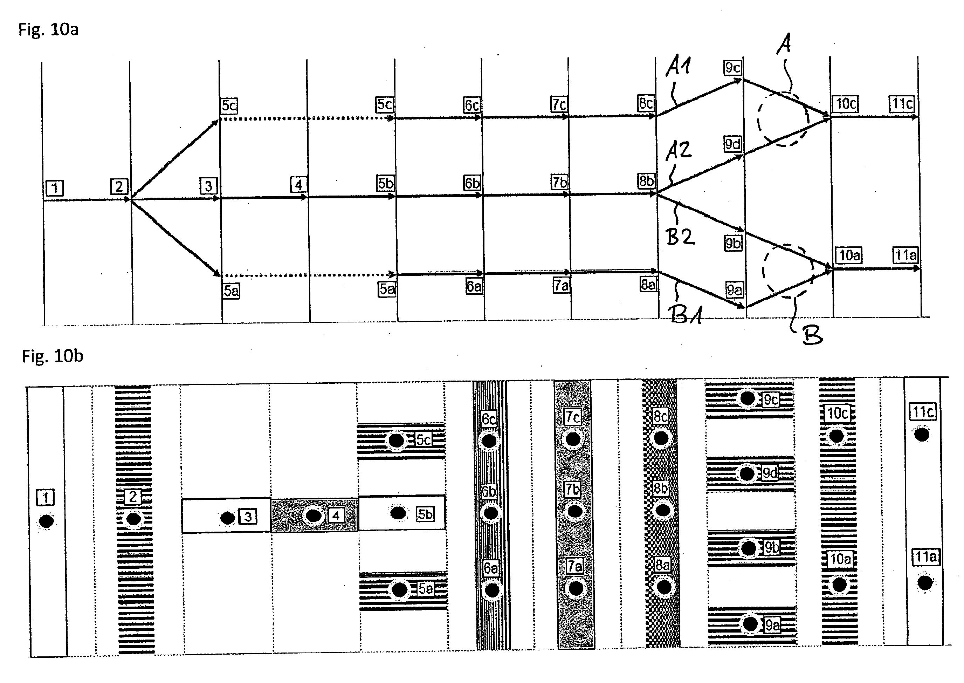

Wie man insbesondere in der Zusammenschau der Figuren 9b und 10a entnehmen kann, findet am Auftreffpunkt 2 an der Unterseite des Abtaststabes A zunächst eine Aufspaltung in 3 Teilstrahlen statt, von denen zwei zu den Auftreffpunkten 5a und 5c auf der Oberseite des Maßstabes M gelangen, wo sie an einem Gitter zurück zum Abtaststab A reflektiert werden. Der dritte Teilstrahl fällt jedoch durch einen transparenten Bereich auf der Oberseite des Maßstabes (Auftreffpunkt 3) auf einen verspiegelten Bereich auf der Rückseite des Maßstabes M (Auftreffpunkt 4), wird dort reflektiert und verlässt den Maßstab M an dessen Vorderseite in Auftreffpunkt 5b. Vergleicht man die Phasenlage der Teilstrahlen in den Auftreffpunkten 5a, 5b und 5c, so haben alle Teilstrahlen einen gleich langen Weg zurückgelegt.

Der Teilstrahl von Auftreffpunkt 5b wird erst im Auftreffpunkt 8b aufgespalten und bildet dann den Teilstrahl A2 des Teilstrahlenbündels A und den Teilstrahl B2 des Teilstrahlenbündels B. Diese legen beide wieder gleich lange Wege zurück.

Da der zusätzliche Weg durch den Maßstab M fest ist, verschwindet der Phasenunterschied nur für einen bestimmten Abtastabstand d, dem Arbeitspunkt. Wellenlängenänderungen des Lichts verfälschen damit im Arbeitspunkt die Positionsmessung nicht. Ändert sich der Abtastabstand d, so ändert sich dennoch der Phasenunterschied der Teilstrahlen innerhalb der Teilstrahlenbündel A, B und die Detektoren erzeugen periodische Signale. Durch Differenzbildung der aus den Teilstrahlen A und B erzeugten Positionsänderung erhält man wieder die Änderung des Abtastabstandes d.

Auch in diesem Ausführungsbeispiel erkennt man in Figur 10a die Asymmetrie der Teilstrahlen innerhalb eines Teilstrahlenbündels A, B, sowie die Symmetrie zwischen den beiden Teilstrahlenbündeln A, B, jeweils bezüglich einer Ebene senkrecht zur Messrichtung X.

Man erkennt auch in diesem Ausführungsbeispiel eine Einrichtung zur Kompensation von Kippbewegungen des Abtaststabes A: Die Teilstrahlen durchlaufen eine erste diffraktive Zylinderlinse an den Auftreffpunkten 6a, 6b, 6c, die das Licht auf einen Spiegel an den Auftreffpunkten 7a, 7b, 7c fokussiert, von wo das Licht zur zweiten diffraktiven Zylinderlinse in den Auftreffpunkten 8a, 8b, 8c wandert.

Die zweite Zylinderlinse erfüllt dabei noch eine zweite Funktion. Wie bereits oben erwähnt, wird der mittlere Teilstrahl, der den zusätzlichen Weg durch das Maßstabssubstrat zurückgelegt hat, erst im Auftreffpunkt 8b in die Teilstrahlen A2 bzw. B2 aufgeteilt.

Um an den Auftreffpunkten 8a, 8b, 8c für die Teilstrahlenbündel A und B eine gemeinsame Linsenwirkung in Y-Richtung bei gleichzeitig unterschiedlicher Beugung in X-Richtung zu erzeugen, weist die optische Struktur 05 eine erste veränderliche Periodizität in Y-Richtung und eine zweite konstante Periodizität in X-Richtung auf. Es entsteht also lokal ein Kreuzgitter oder ein Schachbrettmuster, dessen Periode in Y-Richtung variabel, in X-Richtung jedoch konstant ist. Damit erfüllt auch diese optische Struktur 05 die wichtige Bedingung, dass sie periodisch in X-Richtung ist, sie kann daher auf einem Abtaststab A in beliebiger Länge aufgebracht werden.

Da jede Periodizität oder Frequenz in einem Gitter eigene Beugungsordnungen erzeugt, nimmt die Intensität in den einzelnen Beugungsordnungen und damit in den Teilstrahlen mit der Anzahl der vorhandenen Periodizitäten ab. Um gute Signale in den Detektoren DET zu bekommen, sollte darauf geachtet werden, dass die verwendeten optischen Strukturen O1-O5 lokal maximal zwei Periodizitäten oder Frequenzen aufweisen. Diese Randbedingung ist in beiden Ausführungsbeispielen erfüllt. Transparente Bereiche O1 und Spiegelflächen 02 enthalten gar keine Periodizitäten, eindimensionale Gitter 03 enthalten eine Periodizität (das gilt bei lokaler Betrachtung auch, wenn die Gitterperiode örtlich veränderlich ist). Einzig die optische Struktur 05 des zweiten Ausführungsbeispiels enthält - bei lokaler Betrachtung - zwei Periodizitäten.

Diese Randbedingung bewirkt beispielsweise, dass in einzelnen Grenzflächen von Abtastplatte A oder Maßstab M nicht zu viele Funktionen wie Aufspalten oder Vereinigen von Teilstrahlen, Ausrichten von Teilstrahlen oder Fokussieren von Teilstrahlen gelegt werden können, vielmehr müssen die benötigen Funktionalitäten so verteilt werden, dass die Bedingung, lokal maximal zwei Periodizitäten bzw. Frequenzen in den optischen Strukturen O1 - 05 zu haben, erfüllt werden kann.

In beiden beschrieben Ausführungsbeispielen findet die zur Kompensation von Kippbewegungen nötige Retroreflexion im Abtaststab A statt. Es ist natürlich auch möglich, diese Funktion im Maßstab M zu verwirklichen. Auch ist die Bezeichnung Abtaststab A und Maßstab M willkürlich, letztlich handelt es sich um zwei gekreuzte Maßverkörperungen, von denen eine zumindest teilweise transparent und die andere zumindest teilweise reflektierend sein muss.

In den Ausführungsbeispielen ist der Abtaststab A in Messrichtung X erstreckt und trägt deshalb Gitter mit Strichen quer zur Messrichtung X und quer zu seiner Erstreckungsrichtung. Der Abtaststab A lässt sich aber auch quer zur Messrichtung X anordnen, wenn er Gitterstriche parallel zu seiner Erstreckungsrichtung trägt, wie dies zum Beispiel in der Figur 6 der eingangs zitierten WO 2008/138501 A1 gezeigt ist. Die Strichrichtung des Maßstabsgitters ist dann ebenfalls entsprechend gedreht.

Die beiden Maßverkörperungen Abtaststab A und Maßstab M müssen auch nicht notwendigerweise linear sein. Solange beide eine Ebene definieren ist es vorstellbar, dass eine der beiden Richtungen X, Y einen Kreisbogen oder eine andere gekrümmte Bahn darstellt, relativ zu der eine Verschiebung gemessen werden soll. Auf diese Weise kann beispielsweise ein Weg auf einem Kreisbogen und damit ein Winkel gemessen werden.

In allen Ausführungsbeispielen verlassen gemäß der Figuren nach der Vereinigung der Teilstrahlen A1, A2, bzw. B1, B2 pro Teilstrahlenbündel A, B ein Lichtstrahl die Abtastplatte Richtung Detektor. Dort müssen aber pro Teilstrahlenbündel jeweils mehrere phasenverschobene Signale in mehreren Detektoren gebildet werden. Entweder werden hierzu noch andere Beugungsordnungen als die beiden gezeichneten Strahlen herangezogen, oder es werden mittels zusätzlicher phasenschiebender Elemente, Polarisatoren und Strahlteiler im Strahlengang entsprechende Lichtstrahlen für die Detektoren erzeugt. Solche Maßnahmen sind fachüblich und werden hier nicht näher ausgeführt.

Es ist vorteilhaft, vor der zur Kompensation von Nickbewegungen benötigten Retroreflexion mittels diffraktiver Zylinderlinsen und Spiegel alle beteiligten Teilstrahlen parallel oder zumindest so auszurichten, dass die Richtungskomponenten in Messrichtung X betragsmäßig gleich sind, da dann für alle Teilstrahlen die gleichen Zylinderlinsen verwendet werden können.

## Patentansprüche

1. Optische Positionsmesseinrichtung mit einem Abtaststab (A) und einem Maßstab (M), wobei der Abtaststab (A) in eine erste oder zweite von zwei Richtungen (X, Y) und der Maßstab (M) in die jeweils andere der beiden Richtungen (X, Y) erstreckt ist, und wobei der Maßstab (M) in einer dritten Richtung (Z) senkrecht zur ersten und zweiten Richtung (X, Y) um einen Abtastabstand (d) zum Abtaststab (A) versetzt angeordnet ist, sowie mit einer Lichtquelle, deren Licht den Abtaststab (A) an einem Kreuzungspunkt von Abtaststab (A) und Maßstab (M) durchstößt, um auf den Maßstab (M) zu fallen und von dort zurück zum Abtaststab (A) und weiter zu einem Detektor zu gelangen, wobei das Licht an optischen Strukturen (01, 02, 03, 04, 05) von Abtaststab (A) und Maßstab (M) durch Beugung in unterschiedliche Teilstrahlen (A1, A2, B1, B2) aufgespalten und wieder vereinigt wird, wobei durch Interferenz von miteinander vereinigten Teilstrahlen (A1, A2, B1, B2) bei einer Verschiebung zwischen Abtaststab (A) und Maßstab (M) in der ersten Richtung (X) periodische Detektorsignale entstehen, **dadurch gekennzeichnet, dass** auch bei einer Änderung des Abtastabstandes (d) zwischen Abtaststab (A) und Maßstab (M) periodische Detektorsignale entstehen.

2. Optische Positionsmesseinrichtung nach Anspruch 1, **dadurch gekennzeichnet, dass** die Detektorsignale bei einer Verschiebung zwischen Abtaststab (A) und Maßstab (M) in der zweiten Richtung (Y) unverändert bleiben.

3. Optische Positionsmesseinrichtung nach Anspruch 1 oder 2, **dadurch gekennzeichnet, dass** die Teilstrahlen (A1, A2, B1, B2) Gruppen (A, B) bilden, wobei die Teilstrahlen (A1, A2) einer ersten Gruppe (A) und die Teilstrahlen (B1, B2) einer zweiten Gruppe (B) untereinander einen vom Abtastabstand (d) abhängigen Phasenunterschied aufweisen.

4. Optische Positionsmesseinrichtung nach Anspruch 3, **dadurch gekennzeichnet, dass** der Phasenunterschied für einen bestimmten Abtastabstand (d) verschwindet.

5. Optische Positionsmesseinrichtung nach Anspruch 4, **dadurch gekennzeichnet, dass** jeweils ein Teilstrahl (A1, B1) innerhalb jeder Gruppe (A, B) einen zusätzlichen Weg innerhalb eines transparenten Substrats des Maßstabs (M) oder des Abtaststabes (A) zurücklegt.

6. Optische Positionsmesseinrichtung nach Anspruch 3, 4, oder 5, **dadurch gekennzeichnet, dass** die Teilstrahlen (A1, A2) der ersten Gruppe (A) spiegelsymmetrisch zu den Teilstrahlen (B1, B2) der zweiten Gruppe (B) bezüglich einer Ebene senkrecht zur ersten Richtung (X) verlaufen.

7. Optische Positionsmesseinrichtung nach Anspruch 3, 4, 5 oder 6, **dadurch gekennzeichnet, dass** die Teilstrahlen (A1, A2) der ersten Gruppe (A) bzw. die Teilstrahlen (B1, B2) der zweiten Gruppe (B) untereinander einen asymmetrischen Verlauf bezüglich einer Ebene senkrecht zur ersten Richtung (X) aufweisen.

8. Optische Positionsmesseinrichtung nach einem der Ansprüche 3 - 7, **dadurch gekennzeichnet, dass** die Teilstrahlen (A1, A2, B1, B2) eine Retroreflexion erfahren.

9. Optische Positionsmesseinrichtung nach Anspruch 8, **dadurch gekennzeichnet, dass** die Teilstrahlen (A1, A2, B1, B2) vor und nach der Retroreflexion parallel verlaufen.

10. Optische Positionsmesseinrichtung nach Anspruch 8 oder 9, **dadurch gekennzeichnet, dass** die Retroreflexion mittels wenigstens einer diffraktiven Linse (O4, 05) und einer Spiegelfläche (O2) erfolgt.

11. Optische Positionsmesseinrichtung nach einem der Ansprüche 3 - 10, **dadurch gekennzeichnet, dass** aus den interferierenden Teilstrahlen (A1, A2, B1, B2) jeder Gruppe (A, B) jeweils gegeneinander phasenverschobene Detektorsignale entstehen, wobei sich durch unterschiedliche Kombination der Detektorsignale der ersten Gruppe (A) und der zweiten Gruppe (B) einerseits die Verschiebung zwischen Abtaststab (A) und Maßstab (M) in der ersten Richtung (X) und andererseits die Änderung des Abtastabstandes (d) ermitteln lassen.

12. Optische Positionsmesseinrichtung nach einem der vorhergehenden Ansprüche, **dadurch gekennzeichnet, dass** die optischen Strukturen (O1, 02, 03, 04, 05) auf dem Abtaststab (A) periodisch oder translationsinvariant sind bezüglich der ersten Richtung (X).

13. Optische Positionsmesseinrichtung einem der vorhergehenden Ansprüche, **dadurch gekennzeichnet, dass** die optischen Strukturen (O1, 02, 03, 04, 05) auf dem Maßstab (M) periodisch oder translationsinvariant sind bezüglich der zweiten Richtung (Y).

14. Optische Positionsmesseinrichtung nach Anspruch 12 oder 13, **dadurch gekennzeichnet, dass** die optischen Strukturen (O1, 02, 03, 04, 05) lokal maximal zwei Periodizitäten aufweisen.

## Claims

1. Optical position measuring device having a sampling strip (A) and a measuring strip (M), wherein the sampling strip (A) extends in a first or second of two directions (X, Y) and the measuring strip (M) extends in the respective other of the two directions (X, Y), and wherein the measuring strip (M) in a third direction (Z) is arranged offset from the sampling strip (A) by a sampling distance (d) perpendicular to the first and second directions (X, Y), and having a light source, the light of which pierces through the sampling strip (A) at an intersection of sampling strip (A) and measuring strip (M) so as to be incident on the measuring strip (M) and to pass from there back to the sampling strip (A) and further on to a detector, wherein the light is split up by diffraction into various partial beams (A1, A2, B1, B2) at optical structures (O1, 02, 03, 04, 05) of sampling strip (A) and measuring strip (M) and reunited, wherein, in the case of a displacement between sampling strip (A) and measuring strip (M) in the first direction (X), periodic detector signals are generated due to interference of the united partial beams (A1, A2, B1, B2), **characterized in that** periodic detector signals are generated even if the sampling distance (d) between sampling strip (A) and measuring strip (M) changes.

2. Optical position measuring device according to Claim 1, **characterized in that** the detector signals remain unchanged in the case of a displacement between sampling strip (A) and measuring strip (M) in the second direction (Y).

3. Optical position measuring device according to Claim 1 or 2, **characterized in that** the partial beams (A1, A2, B1, B2) form groups (A, B), wherein the partial beams (A1, A2) of a first group (A) and the partial beams (B1, B2) of a second group (R) have, among them, a phase difference which is dependant on the sampling distance (d).

4. Optical position measuring device according to Claim 3, **characterized in that** the phase difference disappears for a specific sampling distance (d).

5. Optical position measuring device according to Claim 4, **characterized in that** in each case one partial beam (A1, B1) within each group (A, B) travels an additional path within a transparent substrate of the measuring strip (M) or of the sampling strip (A).

6. Optical position measuring device according to Claim 3, 4 or 5, **characterized in that** the partial beams (A1, A2) of the first group (A) extend mirror-symmetrically to the partial beams (B1, B2) of the second group (B) with respect to a plane perpendicular to the first direction (X).

7. Optical position measuring device according to Claim 3, 4, 5 or 6, **characterized in that** the partial beams (A1, A2) of the first group (A) and the partial beams (B1, B2) of the second group (B) have, among them, an asymmetrical profile with respect to a plane perpendicular to the first direction (X).

8. Optical position measuring device according to one of Claims 3-7, **characterized in that** the partial beams (A1, A2, B1, B2) undergo retroreflection.

9. Optical position measuring device according to Claim 8, **characterized in that** the partial beams (A1, A2, B1, B2) extend in parallel before and after the retroreflection.

10. Optical position measuring device according to Claim 8 or 9, **characterized in that** the retroreflection is effected using at least one diffractive lens (O4, O5) and a mirror surface (O2).

11. Optical position measuring device according to one of Claims 3-10, **characterized in that** in each case mutually phase-shifted detector signals are produced from the interfering partial beams (A1 A2, B1, B2) of each group (A, B), wherein the displacement between sampling strip (A) and measuring strip (M) in the first direction (X), on the one hand, and the change of the sampling distance (d), on the other hand, can be ascertained by way of a different combination of the detector signals of the first group (A) and the second group (B).

12. Optical position measuring device according to one of the preceding claims, **characterized in that** the optical structures (O1, 02, 03, 04, 05) on the sampling strip (A) are periodic or translation-invariant with respect to the first direction (X).

13. Optical position measuring device according to one of the preceding claims, **characterized in that** the optical structures (O1, O2, O3, O4, O5) on the measuring strip (M) are periodic or translation-invariant with respect to the second direction (Y).

14. Optical position measuring device according to Claim 12 or 13, **characterized in that** the optical structures (O1, O2, O3, O4, O5) locally have a maximum of two periodicities.

## Revendications

1. Dispositif de mesure de position optique comportant une tige de détection (A) et une tige graduée (M), dans lequel la tige de détection (A) s'étend dans une première ou une deuxième de deux directions (X, Y) et la tige graduée (M) s'étend respectivement dans l'autre des deux directions (X, Y), et dans lequel la tige graduée (M) est disposée dans une troisième direction (Z) perpendiculaire aux première et deuxième directions (X, Y) en étant décalée d'une distance de détection (d) par rapport à la tige de détection (A), ainsi qu'une source lumineuse dont la lumière traverse la tige de détection (A) en un point de croisement entre la tige de détection (A) et la tige graduée (M) afin qu'elle soit incidente sur la tige graduée (M) et soit renvoyée de là vers la tige de détection (A) puis vers un détecteur, dans lequel la lumière est décomposée au niveau de structures optiques (O1, 02, 03, 04, O5) de la tige de détection (A) et de la tige graduée (M) par diffraction en des faisceaux partiels différents (A1, A2, B1, B2) puis est recombinée, dans lequel des signaux de détecteur périodiques sont générés par interférence des faisceaux partiels combinés les uns aux autres (A1, A2, B1, B2) lors d'un déplacement entre la tige de détection (A) et la tige graduée (M) dans la première direction (X), **caractérisé en ce que** des signaux de détecteur périodiques sont également générés lors d'une variation de la distance de détection (d) entre la tige de détection (A) et la tige graduée (M).

2. Dispositif de mesure de position optique selon la revendication 1, **caractérisé en ce que** les signaux de détecteur restent inchangés lors d'un déplacement entre la tige de détection (A) et la tige graduée (M) dans la deuxième direction (Y).

3. Dispositif de mesure de position optique selon la revendication 1 ou 2, **caractérisé en ce que** les faisceaux partiels (A₋, A2, B1, B2) forment des groupes (A, B), dans lequel les faisceaux partiels (A1, A2) d'un premier groupe (A) et les faisceaux partiels (B1, B2) d'un deuxième groupe (B) présentent les uns par rapport aux autres un déphasage dépendant de la distance de détection (d).

4. Dispositif de mesure de position optique selon la revendication 3, **caractérisé en ce que** le déphasage disparaît pour une distance de détection (d) déterminée.

5. Dispositif de mesure de position optique selon la revendication 4, **caractérisé en ce qu'**un faisceau partiel (A1, B1), à l'intérieur de chaque groupe (A, B), parcourt un chemin supplémentaire à l'intérieur d'un substrat transparent de la tige graduée (M) ou de la tige de détection (A).

6. Dispositif de mesure de position optique selon la revendication 3, 4 ou 5, **caractérisé en ce que** les faisceaux partiels (A1, A2) du premier groupe (A) se propagent de manière à ce qu'ils soient symétriques dans un miroir des faisceaux partiels (B1, B2) du deuxième groupe (B) par rapport à un plan perpendiculaire à la première direction (X).

7. Dispositif de mesure de position optique selon la revendication 3, 4, 5 ou 6, **caractérisé en ce que** les faisceaux partiels (A1, A2) du premier groupe (A) ou **en ce que** les faisceaux partiels (B1, B2) du deuxième groupe (B) se propagent de manière à ce qu'ils soient asymétriques l'un de l'autre par rapport à un plan perpendiculaire à la première direction (X).

8. Dispositif de mesure de position optique selon l'une quelconque des revendications 3 à 7, caractérisé on ce que les faisceaux partiels (A1, A2, B1, B2) sont soumis à une rétroréflexion.

9. Dispositif de mesure de position optique selon la revendication 8, **caractérisé en ce que** les faisceaux partiels (A1, A2, B1, B2) se propagent parallèlement avant et après la rétroréflexion.

10. Dispositif de mesure de position optique selon la revendication 8 ou 9, **caractérisé en ce que** la rétroréflexion s'effectue au moyen d'au moins une lentille de diffraction (O4, O5) et d'une surface réfléchissante (02).

11. Dispositif de mesure de position optique selon l'une quelconque des revendications 3 à 10, **caractérisé en ce que** des signaux de détecteur respectifs déphasés les uns par rapport aux autres sont générés à partir des faisceaux partiels (A1, A2, B1, B2) de chaque groupe (A, B) interférant mutuellement, dans lequel on détermine d'une part le déplacement entre la tige de détection (A) et la tige graduée (M) dans la première direction (X) et d'autre part la variation de la distance de détection (d) au moyen de combinaisons différentes des signaux de détecteur du premier groupe (A) et du deuxième groupe (B).

12. Dispositif de mesure de position optique selon l'une quelconque des revendications précédentes, **caractérisé en ce que** les structures optiques (O1, 02, 03, 04, 05) présentes sur la tige de détection (A) sont invariantes périodiquement ou en translation par rapport à la première direction (X).

13. Dispositif de mesure de position optique selon l'une quelconque des revendications précédentes, **caractérisé en ce que** les structures optiques (O1, 02, 03, 04, 05) présentes sur la tige graduée (M) sont invariantes périodiquement ou en translation par rapport à la deuxième direction (Y).

14. Dispositif de mesure de position optique selon la revendication 12 ou 13, **caractérisé en ce que** les structures optiques (O1, 02, 03, 04, 05) présentent localement au maximum deux périodicités.
